# EUROPÄISCHE PATENTANMELDUNG

(11) **EP 2 260 692 A1**
(43) Veröffentlichungstag der Anmeldung: **15.12.2010**
(21) Anmeldenummer: 10005984.9
(22) Anmeldetag: 10.06.2010
(51) Int. Cl.: A01D 46/00, A01D 46/24

(54) **System und Vorrichtung zur Automatisierung der Ernte in Baumkulturen**

(30) Priorität: 12.06.2009 IT BZ20090028
(71) Anmelder: Windegger Walter & Co. KG-Sas, 39011 Lana (BZ) (IT); KMS Mechatronics di Kofler Andreas, 39052 Caldaro (BZ) (IT)
(72) Erfinder: Windegger, Walter Alois, 39011 Lana (BZ) (IT); Kofler, Andreas, 39052 Caldaro (Bolzano) (IT)
(74) Vertreter: Oberosler, Ludwig

(57) **Zusammenfassung**

System zur Automatisierung der Ernte in Obstanlagen oder allgemein in landwirtschaftlichen Anlagen mit Einsatz mindestens zweier selbstfahrender ferngesteuerter Transportwägen (6) für Kisten (3) oder Erntebehälter zwecks Beförderung (3v, 3p) von einer oder mehreren Arbeitsgruppen (2, 2a) zu mindestens einer Position (Z) für das Abladen der vollen Behälter und Aufladen der leeren Behälter, wobei die Navigation der selbstfahrenden Transportwägen (6) über ein satelitengestütztes Positionierungssystem mit globaler und kontinuierlicher Abdeckung (S, N) erfolgt, die Steuerung und die Koordination der Bewegungen (3v, 3p) der selbstfahrenden Transportwägen (6), bzw. der Wartezeiten und der Ausweichbewegungen zwecks Verhinderung von Kollisionen zwischen den Wägen (6), durch eine Steuerungzentrale (C) mit Sender-Empfänger für Impulse (7) und Speicher (M) für die kartographischen Daten der möglichen Fahrbahnen innerhalb der Anlage und der Position mindestens einer automatisierten Ablade- und Beladestation, bzw. eines Bereiches an welchem das Abladen- und Aufladen der Behälter oder Kisten (3) nach traditioneller Art erfolgt, durchgeführt und optimiert wird.

## Beschreibung

### Beschreibung

Die Erfindung bezieht sich auf ein System und auf eine Vorrichtung zur Automatisierung und Rationalisierung der Erntearbeiten insbesondere in Baumkulturen, z.B. in Obstanlagen mit zwischen, zueinander parallel angeordneten Baumreihen, freien Durchfahrten, wobei drei Varianten des Erntevorgangs vorgesehen sind:
- im Falle von Bäumen an welchen die Früchte vom Boden aus erreichbar sind, die vollständige Ernte durch Einsatz selbsfahrender automatisierter Transportwägen;
- im Falle von Bäumen an welchen nicht alle Früchte vom Boden aus erreichbar sind, die teilweise Ernte, meist von 2/3 der gesamten Früchte, durch Einsatz selbstfahrender automatisierter Transportwägen wobei die Früchte welche vom Boden aus nicht erreichbar sind, mittels bekannter Vorrichtungen geerntet werden;
- oder, wiederum im Falle von Bäumen an welchen nicht alle Früchte vom Boden aus erreichbar sind, wobei die vollständige Ernte mit Einsatz an und für sich bekannter selbstfahrender Erntewägen stattfindet welche jedoch mit einer Vorrichtung ausgestattet sind über welche die leeren Kisten von den selbstfahrenden automatisierten Transportwägen auf den Erntewagen befördert werden können und die vollen Kisten von diesem auf die selbstfahrenden Transportwägen befördert werden können.

Der intensive Anbau der Obstbäume in modernen Anlagen erfolgt, zwecks Erleichterung der verschiedenen Bearbeitungen und Ermöglichung einer mindest teilweisen Automatisierung, durch Pflanzung der Bäume auf schwachen Unterlagen welche in Reihen mit dazwischenliegenden Durchfahrten angeordnet sind, wobei diese knapp die Durchfahrt der Traktoren oder anderer schmalspuriger Fahrzeuge ermöglichen.

Dies bringt mit sich, dass ca. 2/3 der Früchte vom Boden aus geerntet werden können während für das restliche 1/3 der Früchte meist selbstfahrende Vorrichtungen eingesetzt werden auf welchen die Arbeiter auf eventuell beweglichen Trittflächen oder Plattformen in einer bestimmten Höhe vom Boden stehen.

Für das Ernten vom Boden aus sind verschiedene Systeme und Vorrichtungen entwickelt worden um die Arbeit zu erleichtern, wobei die Arbeiter spezifische Erntebehälter verwenden, Transportbänder und selbstfahrende oder manuell bewegte Wägen für den Transport der Kisten eingesetzt werden.

Insbesondere bei Anlagen mit einer gewissen Flächenausdehnung auf welcher mehrere Arbeitgruppen eingesetzt werden, hat die Praxis gezeigt, dass die Zeiten für die Verteilung der leeren Kisten, für den Transport der vollen Kisten und für das Aufladen der Kisten auf die Transportmittel beträchtlich sind und oft Wartezeiten für die Arbeitsgruppen mit sich bringen wenn diese nicht rechtzeitigt mit Kisten versorgt werden können.

Die Erfindung stellt sich die Aufgabe ein System und die entsprechende Vorrichtung zu schaffen um die Ernte schnell und möglichst schonend für die Früchte durchzuführen und um die Verteilung der leeren Kisten sowie den Transport der vollen Kisten auf dem Erntegelände, samt der Verladung dieser auf die Transportmittel oder die Vorrichtungen für die Zwischenlagerung, zu optimieren.

Zur Lösung dieser Aufgabe schlägt die Erfindung ein hoch automatisiertes System vor welches folgendes umfasst:
- mehrere selbstfahrende Wägen für den Transport der Kisten,
- eine oder mehrere Vorrichtungen für die Zwischenlagerung der kisten oder Transportmittel für die leeren und die vollen Kisten,
- einen oder mehrere Roboter für das Abladen der leeren Kisten von den Transportmitteln oder von den Vorrichtungen für die Zwischenlagerung, bzw. für das Aufladen der vollen Kisten,
- und eine Steuerzentrale mit Empfänger-Sender der Steuersignale (z.B. AMBER WIRLESS 8535) und Speicher für die kartographischen Daten der Anlage, diese Station ist immer an der selben fixen Stelle der Anlage positioniert, z.B. an jener Stelle wo die Ablade- Aufladestation für die Kisten positioniert ist.

Die selbstfahrenden Transportwägen sind ferngesteuert über ein satellitengestütztes Positionierungssystem mit globaler und kontinuierlicher Abdeckung, z.B. von der Art GPS (Global Positioning System), GLONASS oder GALILEO welches durch eine Steuerzentrale, ausgestattet mit Sender- Empfänger für Steuersignale und einem Speicher der kartographischen Daten der Anlage, integriert ist; diese Station ist fix positioniert um das Navigationssystem welches mit einer Software arbeitet um die gespeicherten (kartographischen) Daten sämtlicher innerhalb der Anlage möglichen Fahrbahnen von jeder beliebigen Position zu einer oder zu mehreren Auflade- und Abladestationen, bzw. von der genannten Station zu einer der Arbeitsgruppen innerhalb der Anlage, zu verarbeiten. Die selben selbstfahrenden Transportwägen sind weiters erfindungsgemäß mit Ultraschallsonden, Radar und/oder Sensoren ( z.B. Infrarotsonden) ausgestattet welche geeignet sind die Präsenz eventueller Hindernisse (auch Personen oder Tiere) auf der Fahrbahn wahrzunehmen und mit Empfänger für Impulse ausgestattet welche von einer, durch eine Person jeder Arbeitsgruppe betätigte, Fernbedienung ausgesandt werden und die durchgehende oder zeitweise Verfolgungsbewegung des Transportwagens oder den Start des Wagens mit voller Kiste in Richtung Aufladestation wo die volle Kiste auf eine Vorrichtung für die Zwischenlagerung aufgeladen wird, bestimmen. Das durch die fix positionierte Steuerzentrale, mit Sender und Empfänger für die Impulse, integrierte Navigationssystem ist in der Lage in jedem Moment die exakte Position jeder der selbstfahrenden Transportwägen und die Position einer oder mehrerer Auflade- und Abladestationen wahrzunehmen.

Vorteilhafterweise ist die Konstruktion der selbstfahrenden Transportwägen extrem kompakt sodass keine Wagenteile aus der Form des Bodens der auf der Ladefläche liegenden Kiste hervorragen, weiters ist sie niedrig um die Arbeiten beim direkten Befüllen der Kiste zu erleichtern und um ein Beschädigen der Früchte durch mehrfaches Handhaben zu vermeiden.

Die Station für das Entnehmen der leeren Kisten und das Beladen mit vollen Kisten ist mit einem Stapelroboter ausgestattet welcher eine Gabel bewegt durch welche progressiv von einem, in unmittelbarer Nähe vorgesehenem, Transportmittel oder von einer Zwischenlagervorrichtung die leeren Kisten entnommen werden um auf einem, in vorbestimmter naher Position in Wartestellung verweilenden, selbstfahrenden Transportwagen abgelegt zu werden, bzw. um eine volle Kiste vom, in besagter Wartestellung verweilenden, Transportwagen abzuheben und auf einem, in unmittelbarer Nähe anwesendem, Transportmittel oder auf eine Zwischenlagervorrichtung abzulegen. Die besagten Transportmittel oder Zwischenlagervorrichtungen sind mir Förderketten oder mit anderen Mitteln ausgestattet welche geeignet sind um die leeren Kisten in Richtung Entnahmeposition, bzw. um die vollen Kisten von der Position wo sie abgelegt werden in die progressive Stapelposition, zu bringen. Die Erfindung schließt nicht aus, dass von einer einzigen Vorrichtung zur Zwischenlagerung oder von einem einzigen Transportmittel Gebrauch gemacht wird und dass der Stapelroboter, anschließend an das Abladen von mindestens einem Stapel von Kisten (normlerweise 3 Kisten) von einer Seite der Vorrichtung und anschließend an das Verschieben der verbleibenden Ladung von leeren Kisten in Richtung Entnahmeposition, an der gegenüberliegenden Seite das progressive Beladen mit vollen Kisten durchführt.

Vorteilhafterweise sind zwei Vorrichtungen für die Zwischenlagerung vorgesehen, eine für die leeren Kisten und eine für die vollen Kisten, diese Vorrichtungen haben eine lange und schmale Form so dass sie in zwei angrenzenden Fahrbahnen zwischen den Baumreihen untergebracht werden können, wobei der Stapelroboter zwischen den beiden Vorrichtungen kopfseitig am Beginn der, zwischen den Vorrichtungen der Zwischenlagerung verlaufenden Baumreihe, angeordnet werden kann. Die Vorrichtungen für die Zwischenlagerung und auch der Stapelroboter können in Form eines an einem Traktor ankuppelbaren für den Straßenverkehr zugelassenen Anhängers ausgebildet sein.

Die Erfindung schließt nicht aus, dass der Stapelroboter für das Abladen der leeren Kisten und das Aufladen der vollen Kisten und für deren Stapelung, mit Rädern oder mit Raupen ausgestattet und selbstfahrend ist und dass er über die selbe Steuerzentrale mit Impulse-Sender-Empfänger und eventuell auch über eine Fernbedienung angesteuert wird um die Ablade- und Aufladearbeiten der Kisten auf oder von den selbstfahrenden Transportwägen, welche an der Ablade-Aufladeposition verweilen, durchzuführen und um die Entnahme der leeren Kisten von einem Lagerbereich am Boden, bzw. um das Ablegen der vollen Kisten innerhalb des selben oder eines spezifischen Lagerbereiches am Boden, durchzuführen. Dieser oder diese besagten Lagerbereiche können zwischen den Baumreihen oder seitlich in einer Durchfahrt in der Nähe der Position für das Auf- und Abladen der Transportwägen angeordnet sein; die Positionsdaten der besagten Lagerbereiche sind im Speicher für die "Kartographie" der Anlage enthalten.

Die Erfindung schließt weiters, z. B. im Falle von Anlagen mit begrenzten Ausmaßen, nicht aus, dass die Auf- und Abladearbeiten auf traditionelle Weise durchgeführt werden, z.B. mittels eines Traktors mit Staplergabel. In diesem Fall ist es möglich mehrere selbstfahrende, mit vollen Kisten beladene, Transportwägen in Wartestellung verweilen zu lassen wobei periodisch die vollen Kisten von den einzelnen Wägen entnommen werden und auf einen bekannten Anhänger aufgeladen werden um ins Obstmagazin gebracht zu werden. Vorteilhafterweise werden auch in diesem Fall auf die einzelnen selbstfahrenden Transporfinrägen hintereinander leere Kisten abgelegt und die Wägen hintereinander in Richtung der Positionen der einzelnen Arbeitsgruppen, bzw. in Richtung einer Warteposition nahe der Positionen der Arbeitsgruppen, geschickt.

Die Erfindung wird anschließend anhand eines in den beigelegten Zeichnungen schematisch dargestellten, vorzuziehenden Ausführungsbeispieles des erfindungsgemäßen Systems und der Vorrichtung zum Automatisieren der Erntearbeiten näher erklärt, dabei erfüllen die Zeichnungen rein erklärenden, nicht einschränkenden Zweck.

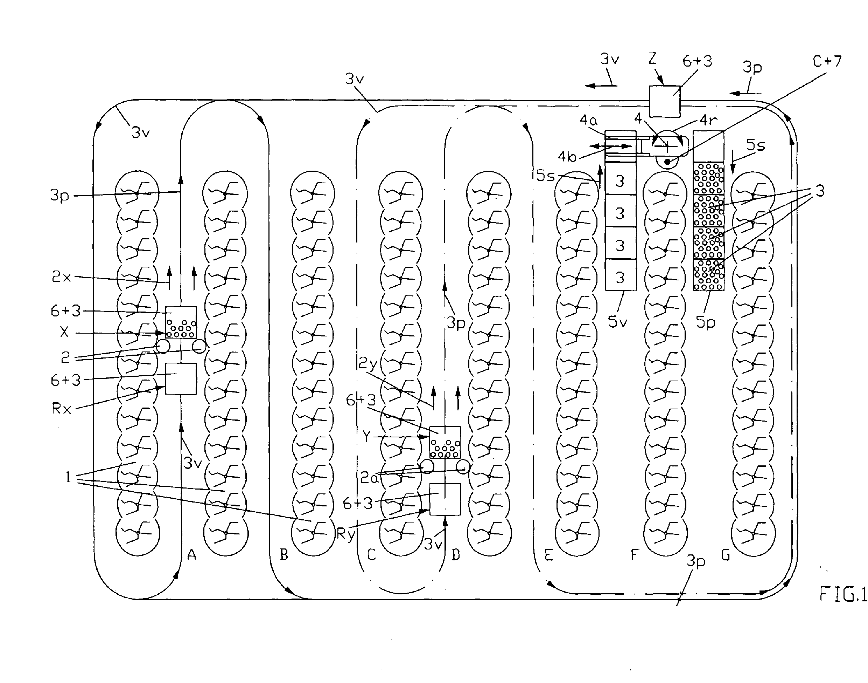

Die Fig. 1 zeigt ein Funktionsschema und die entsprechende erfindungsgemäße Vorrichtung für die Automatisierung der Erntearbeiten in einer Obstanlage, bestehend aus mehreren selbstfahrenden Transportwägen, aus einer Be- und Entladestation mit zwei Vorrichtungen für die Zwischenlagerung welche in den nebeneinander liegenden Durchfahrten, zwischen den Baumreihen vorgesehen sind, aus einer fixen Empfänger- und Sendezentrale für die Steuersignale und aus zwei Arbeitsgruppen.

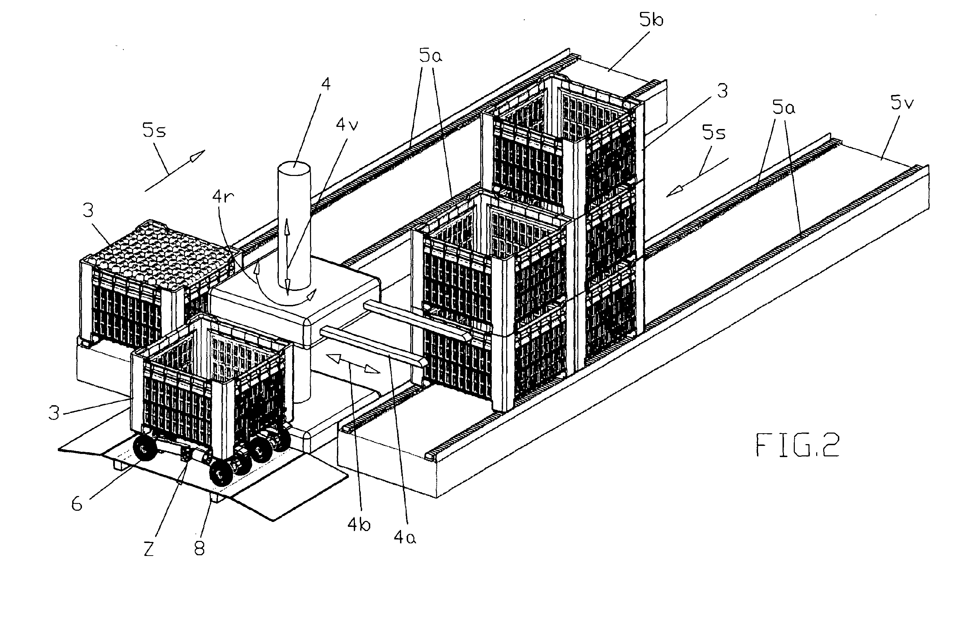

Die Fig. 2 ist eine perspektivische Darstellung der erfindungsgemäßen Auf- und Abladestation bestehend aus einer Vorrichtung zur Zwischenlagerung der leeren Kisten und einer Vorrichtung zur Zwischenlagerung der vollen Kisten und aus einem Stapelroboter mit verstellbarer Plattform zwecks Ausgleich von Bodenunregelmäßigkeiten.

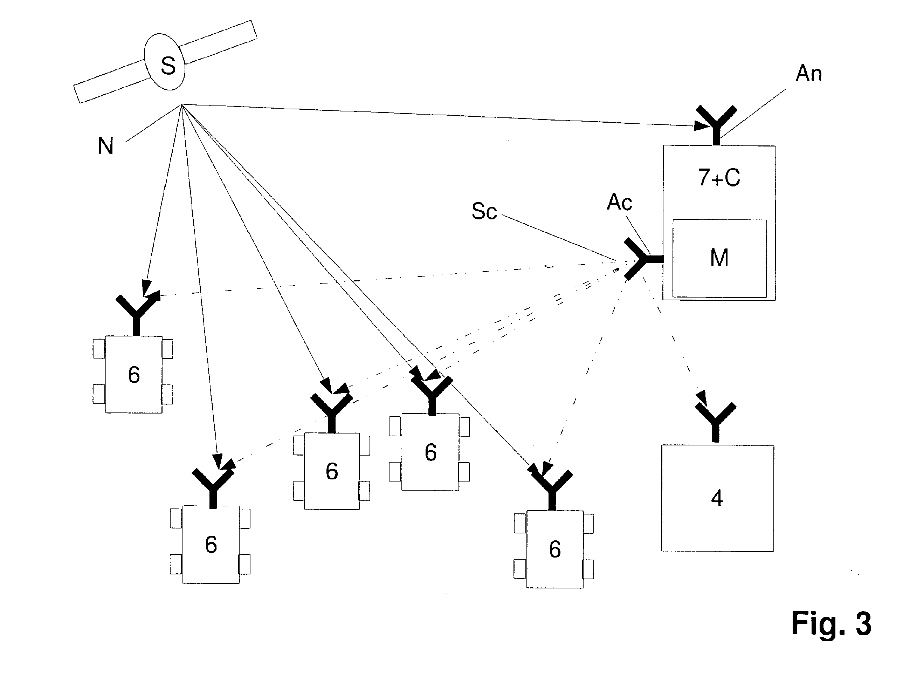

Die Fig. 3 zeigt ein Blockschema des erfindungsgemäßen Navigations- und Steuersystems für die selbstfahrenden Transportwägen.

In einer Obstanlage bestehend aus mehreren Baumreihen 1 mit dazwischenliegenden freien Durchfahrten A, B, C, D, E, F, G wird die Ernte von einer ersten Arbeitsgruppe 2, bestehend aus zwei Arbeitern, in Position X durchgeführt, wobei diese sich entlang der Durchfahrt A fortbewegen 2x , eine zweite Arbeitsgruppe 2, bestehend aus zwei Arbeitern in Position Y, bewegen sich in Richtung 2y entlang der Durchfahrt D. An einem der Enden der Durchfahrt G ist eine Vorrichtung zur Zwischenlagerung 5p für die vollen Kisten 3 vorgesehen während in entsprechender, dazu paralleler Position, in der Durchfahrt F eine Vorrichtung 5v für die Zwischenlagerung der leeren Kisten 3 vorgesehen ist. Die besagten Vorrichtungen 5p, 5v für die Zwischenlagerung sind so angeordnet, dass zwischen ihnen ein Stapelroboter 4 positioniert werden kann. Eine Steuerzentrale C samt Empfänger- Sender der Steuerimpulse 7 und Speicher M der kartographischen Daten der Anlage ist an einer fixen Position innerhalb der Fläche der Anlage, z.B. am Grundgestell des Stapelroboters 4, vorgesehen.

Zwischen den zwei Arbeitsgruppen 2, 2a und dem Stapelroboter 4 bewegen 3v, 3p sich mehrere selbstfahrende Transportwägen 6 mit Kisten 3 welche vom Navigationssystem (z.B. GPS, GLONASS, GALILEO) integriert mit Impulse Sc welche vom Sender-Empfänger 7, zwecks Verbesserung der Präzision der Steuerung der Wägen 6, ausgestrahlt werden, angesteuert werden. Das Navigationssystem liefert der, mit Antenne An für den Empfang der Signale N des satellitengestützten Positionierungssystems ausgestatteten Steuerstation C continuierlich die Positionsdaten des Stapelroboters 4 und jedes der selbstfahrenden Transportwägen 6 samt Kiste 3, dabei besitzt jeder Wagen einen individuellen Kodex ("Adresse").

Der Stapelroboter 4 ist mit einer Staplergabel 4a ausgestattet welche eine horizontale Bewegung 4b, eine vertikale Bewegung 4v und eine Drehbewegung 4r innerhalb einer horizontalen Ebene ausführen kann, der Roboter ist bezüglich der zwei Vorrichtungen 5p, 5v zur Zwischenlagerung so positioniert, dass er leere Kisten 3 von der Vorrichtung 5v entnehmen kann, und sich um 90° drehen kann um die entnommene leere Kiste 3 auf dem selbstfahrenden Transportwagen 6 in Position Z vor dem Roboter ablegen zu können, bzw. dass er eine volle Kiste 3 vom selbstfahrenden Transportwagen in Position Z vor dem Roboter 4 entnehmen kann, um sie infolge Drehung um 90° auf der Vorrichtung 5p abzulegen.

Vorteilhafterweise ist am Boden, vor dem Roboter 4, eine steife Plattform 8 vorgesehen welche verstellbar ist um eine horizontale Position einzunehmen wodurch sichergestellt wird, dass die Ladefläche des Transportwagens 6c, unabhängig von der Bodenbeschaffenheit, immer in perfekt horizontaler Position und auf gleichem Niveau ist, natürlich sind auch der Roboter 4 und beide Vorrichtungen 5p, 5v zur Zwischenlagerung mit einer Einrichtung ausgestattet welche es ermöglicht eventuelle Bodenunebenheiten auszugleichen.

Die Vorrichtungen 5p, 5v zur Zwischenlagerung sind mit Ketten oder mit anderen horizontalen Fördermitteln 5a ausgestattet um die Kisten 3 entlang der Ladefläche oder der Ladeführungen zu bewegen 5s.

Die Inbetriebnahme des Systems bei Beginn der Erntearbeiten erfolgt nach der Positionierung des Roboters 4, des Empfänger-Senders der Impulse 7 samt Steuerzentrale, der Vorrichtungen 5p, 5v für die Zwischenlagerung wie bereits beschrieben und der selbstfahrenden Transportwägen 6, ohne Kisten 3, welche vorzugsweise rechts der Position Z, frontal vor dem Stapelroboter 4, angeordnet werden. Jener Transportwagen 6 welcher gemäß Navigationsdaten sich am nähesten zur Position Z befindet bekommt von der Steuerstation den Konsens um die Position Z zu erreichen wo er anhält, der Roboter 4 erhält den Impuls der Anwesenheit eines Transportwagens 6 ohne Kiste und entnimmt eine leere Kiste 3 von der Vorrichtung 5v der Zwischenlagerung. Die besagte Entnahme erfolgt unter Auswertung der Signals einer Sonde welche an der Staplergabel 4a des Roboters 4, bzw. an der entsprechenden vorderen Seite des Roboters 4, vorgesehen ist und z, B. angibt dass die Kiste 3 oben am, aus drei Kisten bestehenden, Stapel zu entnehmen ist. Die Entnahme erfolgt also durch eine vertikale Bewegung 4v der Gabel 4a in zurückgezogener Position, durch anschließendes Ausfahren 4b der Gabel 4a um unter dem Boden der Kiste 3 eindringen zu können, durch eine anschließende kleine weitere vertikale Anhebbewegung 4v, durch eine Drehbewegung 4r der Gabel oder des gesamten Roboters um 90° in Richtung einer Position vertikal über der Ladefläche des Transportwagens 6 in Wartestellung, durch eine Absenkbewegung der Gabel 4a um die Kiste 3 auf dem Transportwagen abzulegen so dass der Boden der Kiste 3 nichtmehr auf der Gabel 4a aufliegt sondern auf der Ladefläche des Transportwagens 6 aufliegt und durch die folgende Rückziehbewegung der Gabel 4a. Anschließend wird der erste Transportwagen 6 mit leerer Kiste 3, mittels Fernbedienung von einem Arbeiter zur Position X in der Durchfahrt A begleitet wo die Erntearbeiten beginnen können. Der selbe Beladevorgang mit anschließender Begleitung mittels von einem Arbeiter betätigter Fernbedienung wird für einen zweiten Transportwagen 6 mit leerer Kiste 3 durchgeführt um diesen in Position Y in der Durchfahrt D zu bringen wo die Arbeitsgruppe 2a mit den Erntearbeiten beginnt. Nach dem Erreichen der Arbeitspositionen X, Y seitens der ersten Transportwägen 6 mit leeren Kisten 3 wird mittels Fernsteuerung seitens eines der Arbeiter der jeweiligen Arbeitsgruppe 2, 2a der Konsens gegeben damit der Transportwagen 6 mit leerer Kiste z. B. kontinuierlich langsam in Richtung 2x, 2y den entsprechenden Arbeitsgruppen 2, 2a folgt. Infolge des besagten Steuerimpulses welcher den effektiven Beginn der Erntearbeiten in den Positionen X, Y bestimmt, beginnt die Steuerzentrale C über die Antenne An die Positionierungssignale N der besagten Transportwägen 6 und bestimmt durch, über die Antenne An ausgestrahlte, Signale Sc zuerst dass ein leerer Transportwagen 6 sich in Position Z begibt um durch den Roboter 4 mit einer leeren Kiste 3 beladen zu werden und um anschließend eine Warteposition Rx zu erreichen 3v welche hinter dem Transportwagen in Position X liegt deren Kiste befüllt wird, während anschließend ein weiterer Transportwagen angesteuert wird um in Position Z mit einer leeren Kiste 3 beladen zu werden und um die Warteposition Ry hinter der Position Y zu erreichen wo sich der Transportwagen befindet dessen Kiste gerade befüllt wird. Sobald die ersten Transportwägen 6 hintereinander die Belade- und Entladeposition Z verlassen haben, erhält einer der Transportwägen 6 welche sich nahe der Position Z befinden den Konsens um die besagte Position Z zu erreichen, infolge der automatischen Beladung mit einer leeren Kiste 3 mittels Roboter 4, erreicht 3v der Transportwagen 6 eine Warteposition links von der Position Z. In dieser Warteposition können eventuell mehrere Transportwägen 6 beladen mit leeren Kisten 3 geparkt werden. Der erste dieser in Warteposition nahe der Position Z geparkten Transportwägen wird den Konsens erhalten um eine der Positionen X, Y zu erreichen sobald der entsprechende Transportwagen in einer dieser Positionen mit befüllter Kiste 3, über die von einem der Arbeiter 2, 2a betätigten Fernbedienung, den Konsens erhält um sich in Richtung Belade- Entladestation zu bewegen 3p um dort zuerst entladen und anschließend mit einer leeren Kiste 3 beladen zu werden. Während der Erntearbeiten mit Fortbewegung 2x, 2y der Arbeitsgruppen 2, 2a kann der entsprechende Transportwagen 6 mit der Kiste 3 welche gerade befüllt wird kontinuierlich oder mit, über die Fernbedienung einstellbarer Geschwindigkeit oder einstellbaren Pausen, der Fortbewegung der jeweiligen Arbeitsgruppen folgen; Der Transportwagen 6 mit leerer Kiste 3 in Wartestellung hinter den jeweiligen Positionen X, Y folgt dauernd dem entsprechenden Transportwagen 6 dessen Kiste gerade befüllt wird. Der Start des Transportwagens 6 mit voller Kiste 3 von der Befüllungsposition X, bzw. Y bewirkt, dass der hintere folgende Transportwagen 6 mit leerer Kiste in Warteposition automatisch di Position X, bzw. die Position Y, einnimmt um progressiv beladen zu werden.

Vorteilhafterweise können die Batterien der Transportwägen in Warteposition Z oder in der Nähe dieser Position aufgeladen werden indem mehrere Ladestationen mit entsprechenden elektrischen Kontakten vorgesehen sind um den Anschluss an ein Aufladegerät zu schaffen welches z.B. im Grundgestell des Roboters 4 untergebracht sein kann.

Wenn die Anlage eine bedeutende Flächenausdehnung mit relativ langen Durchfahrten hat und/oder wenn mehrere Arbeitsgruppen 2, 2a im Einsatz sind, sind mehrere Transportwägen 6 vorzusehen um Wartezeiten vollständig auszuschließen, entlang der Fahrwege können mehrere Transportwägen 6 mit leeren Kisten 3 in Bewegung und/oder in Wartestellung vorgesehen sein.

Natürlich ist jeder der Transportwägen individuell von der Steuerzentrale C durch den Kodex ("Adresse") erkennbar und mit Vorrichtungen ausgestattet welche über Ultraschall und/oder Mikrowellen und/oder Infrarot-Wellen und/oder Radar und/oder über Berührungssensoren oder Endschalter, Kollisionen unter den Transportwägen 6 sowie zwischen diesen und unvorhergesehenen Hindernissen (Personen, Tiere), welche sich auf der Fahrbahn befinden könnten, verhindern. Vorteilhafterweise wird die Vorfahrt an Kreuzungen, jenem Transportwagen zugeteilt welcher, aufgrund der Navigationsdaten, sich näher dem zu erreichenden Ziel befindet (Roboter 4 oder Arbeitsgruppen 2, 2a), es ist aber auch möglich jenem Transportwagen das Vorrecht zu erteilen welcher weiter vom Ziel entfernt ist oder, im Falle einer Kollisionsgefahr zwischen einem Transportwagen mit leerer Kiste und einem mit voller Kiste, kann es vorteilhaft sein dem Transportwagen mit voller Kiste das Vorrecht zu geben.

Die Vorrichtungen zur Zwischenlagerung können als im Straßenverkehr zugelassene Hänger ausgeführt sein und sind mit Ketten oder anderen Transportorganen 5a versehen welche an der Vorrichtung 5v für die leeren Kisten 3 diese verschieben 5s, bzw. die Kistenstapel in Richtung Entnahmestelle an einem der Enden verschieben, während an der identischen Vorrichtung 5p für die vollen Kisten 3 progressiv die Kisten von der Aufladeposition an einem Ende in die entgegengesetzte Richtung verschoben 5s werden. Die Bewegungen 5s können vom Roboter gesteuert werden, z.B. wenn die Gabel die Entnahmestellung einnimmt, bzw. den Impuls erhält um diese Stellung einzunehmen und eine Sonde an der Vorrichtung 5v für die Zwischenlagerung das Fehlen von leeren Kisten in der Entnahmeposition anzeigt, bzw. an der Vorrichtung 5p die Anwesenheit voller Kisten in der Ablageposition anzeigt, wird durch eine Sonde an der Gabel 4a die Anzahl der gestapelten Kisten in der Entnahmeposition an der Vorrichtung 5v, bzw. in der Ablageposition an der Vorrichtung 5p, angezeigt. Die Verschiebungen 5s können auch infolge Entnahme der letzten anwesenden Kiste 3 in Entnahmeposition an der Vorrichtung 5v, bzw. infolge der Ablage der vollen Kiste 6 auf der Vorrichtung 5p in oberster Position (drittes Niveau) des Stapels in Ablageposition, erfolgen.

Der Roboter 4 kann ein Grundgestell aufweisen welches selbst einstellbar ist oder es kann an den Enden nahe der Entnahmeposition, bzw. der Ablageposition, an den Vorrichtungen 5v, 5p, aufgebaut sein.

Die Steuerzentrale C samt Sender-Empfänger der Impulse 7 muss immer an der selben Stelle der Anlage fix montiert sein, dieser Montagepunkt muss identisch sein mit der Stelle an welcher die Aufnahme und Speicherung der Daten betreffend aller möglichen Fahrwege innerhalb der Anlage (Kartographie) stattgefunden hat; wenn die Steuerstation am Roboter 4, bzw. an dessen Grundgestell vorgesehen ist, muss dieser immer an der selben Stelle installiert werden welche vorteihafterweise durch eine im Boden verankerte Bodenmarke definiert ist.

Natürlich funktioniert das System auch mit mehr als einer Entlade-/Beladestation, es kann vorteilhaft sein dass die Bewegung 3v der Transportwägen 6 mit leeren Steigen 3 immer in die selbe Richtung 3v verläuft und dass auch die Bewegung 3p der Transportwägen 6 mit vollen Kisten 3 in die selbe Richtung verläuft, unabhängig von Richtung der Fortbewegung 2x, 2y der Arbeitsgruppen 2, 2a, ohne jedoch auszuschließen, dass die Steuerzentrale C die einzelnen Transportwägen 6 welche sich zwischen den Positionen X, Y, Z bewegen indem sie den kürzesten Weg wählen; wobei vorgesehen wird, dass im Falle einer Kreuzung, einer der Wägen oder beide, seitlich ausweichen um eine Kollision zu verhindern.

## Patentansprüche

1. System zur Automatisierung der Ernte in Obstanlagen oder allgemein in landwirtschaftlichen Anlagen mit Einsatz mindestens zweier selbstfahrender ferngesteuerter Transportwägen (6) für Kisten (3) oder Erntebehälter zwecks Beförderung (3v, 3p) ausgehend von einer oder mehreren Arbeitsgruppen (2, 2a) zu mindestens einer Position (Z) für das Abladen der vollen Behälter und Aufladen der leeren Behälter, **dadurch gekennzeichnet, dass** die Navigation der selbstfahrenden Transportwägen (6) über ein satelitengestütztes Positionierungssystem mit globaler und kontinuierlicher Abdeckung (S, N) erfolgt, dass die Steuerung und die Koordination der Bewegungen (3v, 3p) der selbstfahrenden Transportwägen (6), bzw. der Wartezeiten und der Ausweichbewegungen zwecks Verhinderung von Kollisionen zwischen den Wägen (6), durch eine Steuerzentrale (C) mit Sender-Empfänger für Impulse (7) und Speicher (M) für die kartographischen Daten der möglichen Fahrbahnen innerhalb der Anlage und der Position mindestens einer automatisierten Ablade- und Aufladestation, bzw. eines Bereiches an welchem das Abladen- und Aufladen der Behälter oder Kisten (3) nach traditioneller Art erfolgt, durchgeführt und optimiert wird.

2. System zur Automatisierung der Ernte gemäß Anspruch 1, **dadurch gekennzeichnet, dass** jeder der selbstfahrenden Transportwägen (6) mittels, von einem der Arbeiter jeder der Arbeitsgruppen (2, 2a) betätigter Fernbedienung, steuerbar ist und dass vor der Betätigung der Fernsteuerung das satellitenunterstützte Navigationssystem (S, N) ausgeschaltet wird.

3. System zur Automatisierung der Ernte gemäß Anspruch 1, **dadurch gekennzeichnet, dass** jeder der Transportwägen mit einem elektronischen Erkennungskodex ausgestattet ist so dass die Steuerimpulse (Sc) welche von der Steuerzentrale (C) mit Sender-Empfänger für Impulse (7) für die verschiedenen Transportwägen (6) ausgestrahlt werden, individuell zugeordnet werden können und die Positionierungsimpulse (N) welche den selben Transportwagen betreffen erkannt werden können.

4. System zur Automatisierung der Ernte gemäß Anspruch 1, **dadurch gekennzeichnet, dass** jeder der Transportwägen (6) mit Sonden und/oder Endschaltern und/oder Berührungssonden und/oder Ultraschallempfänger und/oder Sonden für Infrarotstrahlen und/oder Radar ausgestattet ist um eventuelle Hindernisse, Personen, Tiere welche sich auf der Fahrbahn oder in der Nähe dieser befinden, bzw. die Anwesenheit eines weiteren sich bewegenden (3v, 3p) Transportwagens, wahrnehmen zu können.

5. System zur Automatisierung der Ernte, gemäß Anspruch 1, **dadurch gekennzeichnet, dass** hinter jedem sich in Ernteposition (X, Y) befindlichen Transportwagen (6) mit Kiste welche befüllt wird, automatisch ein Transportwagen (6) mit leerer Kiste in Warteposition (Rx, Ry) herangeführt wird welcher in einem gewissen Abstand dem Transportwagen mit Kiste welche gerade befüllt wird folgt und dass dieser Transportwagen, sobald die Kiste voll ist, über die Fernbedienung den Impuls zum Start (3p) in Richtung Ablade- Aufladestation (Z) erhält, dabei rückt der Transportwagen mit der leeren Kiste von der Warteposition (Rx, Ry) in die Ernteposition (X, Y) vor um während der Erntearbeiten der Arbeitsgruppe (2, 2a) zu folgen.

6. System zur Automatisierung der Ernte gemäß Anspruch 1, **dadurch gekennzeichnet, dass** auf dem Weg von der Ablade- Aufladestation (4, 5v, 5p) zu den Erntepositionen (X, Y) mindestens ein Transportwagen (6) mit leerer Kiste in Wartestellung vorgesehen wird welcher automatisch von dieser Position in die Ernteposition (X, Y) gebracht wird indem, mittels Fernbedienung, der Start des Transportwagens mit voller Kiste in Richtung Ablade- Aufladestation bestimmt wird, was gleichzeitig auch das Beladen eines Transportwagens mit einer leeren Kiste auslöst welcher anschließend in der Nähe der Ablade- Aufladestation in Wartestellung geht und dass in dieser Position und/oder in der Position (Z) der Ablade- Aufladestation vorgesehen ist, dass die Batterien der Transportwägen mittels Ladegerät über elektrische Schleifkontakte aufgeladen werden.

7. Vorrichtung gesteuert über das System zur Automatisierung der Ernte gemäß den Ansprüchen von 1 bis 6, **dadurch gekennzeichnet, dass** diese aus mindestens zwei selbstfahrenden ferngesteuerten Transportwägen welche über ein satelitengestütztes Navigations- und Positionierungssystem gesteuert werden, aus einer Steuerzentrale (C) mit Sender-Empfänge für Steuerimpulse (7) und Speicher (M) für die kartographischen Daten aller möglichen Fahrwege innerhalb der Anlage und der Daten einer oder mehrerer Ablade- und Aufladestationen (4, 5v, 5p), bzw. der Daten der Position oder des Bereiches (Z) zum Abladen und Aufladen durch traditionelle Mittel, besteht.

8. Vorrichtung gemäß Anspruch 7, **dadurch gekennzeichnet, dass** die Ablade-Aufladestation aus einem Stapelroboter (4) und aus mindestens einer Vorrichtung (5v, 5p) zur Zwischenlagerung oder den Transport der Kisten (3), ausgestattet mit bekanntem Fördersystem (5s) für die leeren Kisten auf horizontalen Führungen von der Ablegeposition in Richtung Stapelbereich welcher sich zwischen dem besagten Ablagebereich und der gegenüberliegenden Endposition befindet, besteht und dass der besagte Stapelroboter (4) in nächster Nähe zur Ablade- Aufladeposition (Z), wo der zu beladende oder entladende Transportwagen (6) anhält und zu einer oder mehrerer Vorrichtungen zur Zwischenlagerung (5v, 5p) oder zu Transportvorrichtungen, installiert ist.

9. Vorrichtung gemäß Anspruch 7, **dadurch gekennzeichnet, dass** der Roboter (4) selbstfahrend ist und mit Rädern oder Raupen ausgestattet ist, dass er, wie die selbstfahrenden Transportwägen (6), über Fernbedienung und über das satellitengestützte Positionierungssystem (S, N), integriert mit einer Steuerzentrale (C) mit Sender-Empfänger von Impulse (7) und mit Speicher (M) steuerbar ist, wobei dieser auch die Daten der Position der Stapelbereiche am Boden für die vollen und leeren Kisten (3) zwecks automatischem Abladen und Aufladen der Transportwägen und die Aufnahme der leeren Kisten vom Bodenbereich, bzw. zwecks Abladen der leeren Kisten im Stapelbereich am Boden, enthält.

10. Vorrichtung gemäß Anspruch 7, **dadurch gekennzeichnet, dass** der Stapelroboter (4) mit einer aus- und einfahrbaren (4b), vertikal beweglichen (4v) und um eine vertikale Achse drehbaren (4r), horizontalen Gabel (4a) ausgestattet ist und dass diese Gabel (4a) mit einer Sonde oder einem Fühler ausgestattet ist welcher geeignet ist die unterschiedlichen Stapelebenen bei der Entnahme der leeren Kisten (3), bzw. bei Ablage der vollen Kisten (3) während der vertikalen Bewegung (4v) mit eingezogener Gabel (4a), zu erkennen.
